# EUROPÄISCHE PATENTSCHRIFT

(11) **EP 3 074 680 B1**
(45) Veröffentlichungstag und Bekanntmachung des Hinweises auf die Patenterteilung: **18.10.2017**
(21) Anmeldenummer: 14809291.9
(22) Anmeldetag: 21.11.2014
(51) Int. Cl.: F16K 37/00

(54) **VENTIL**
VALVE
SOUPAPE

(30) Priorität: 26.11.2013 DE 102013019702
(43) Veröffentlichungstag der Anmeldung: 05.10.2016
(73) Patentinhaber: GEA Tuchenhagen GmbH, 21514 Büchen (DE)
(72) Erfinder: SCHERER, Bettina, 97959 Assamstadt (DE); PORATH, Bernd, 23881 Breitenfelde (DE)
(74) Vertreter: Hauck Patentanwaltspartnerschaft mbB
(86) Internationale Anmeldenummer: PCT/EP2014/003116
(87) Internationale Veröffentlichungsnummer: WO 2015/078568

(56) Entgegenhaltungen:
- US-A1- 2004 107 767
- US-A1- 2005 016 592
- US-A1- 2010 305 883

## Beschreibung

Die Erfindung betrifft ein Ventil nach dem Oberbegriff des ersten Anspruchs.

In der Prozessindustrie, insbesondere der Getränketechnik, Lebensmitteltechnik, Pharmazie und Biochemie, sind Ventile wichtige Bauteile zur Führung der Produktbestandteile innerhalb der Prozessanlage. In der Regel haben diese Ventile automatische Antriebe, beispielsweise auf pneumatischer Grundlage, die mittels Anlagensteuerungen zur Veränderung der Ventilstellung angesteuert werden. Die Ventilstellung ist dabei eine wichtige Größe in der Lenkung der Ströme der Produktbestandteile und wird daher im Ventil erfasst und an die Anlagensteuerung rückgemeldet.

Stand der Technik ist heute, dass die Ventilstellung über einen Sensor, häufig ein Näherungsinitiator, oder über ein Wegmesssystem detektiert wird. Mit diesen Mitteln wird die Stellung der Kolbenstange gemessen, die den Antrieb mit einem Ventilteller verbindet, der der Herstellung oder Trennung des Produktstromes durch das Ventil dient. Aus der Stellung der Kolbenstange außerhalb des Ventilgehäuses wird dann die Stellung des Ventiltellers im Ventilgehäuse abgeleitet und damit letztlich darauf geschlossen, ob sich das Ventil in der Schließ- oder Offenstellung befindet. Es handelt sich daher um eine indirekte Messung der Stellung des Ventiltellers.

Die indirekte Messung kann zu Fehlmessungen der Ventilstellung führen. Falls sich nun beispielsweise eine Verbindung zwischen Ventilteller, Ventilstange und Kolbenstange oder zwischen Kolben und Kolbenstange gelöst hat, würde zwar eine Bewegung detektiert werden können. Diese gibt jedoch keinen Rückschluss auf die Stellung des Ventiltellers und damit keinen Rückschluss, ob Medium durch das Ventil hindurchgelassen wird oder nicht. Es ist nicht klar, ob der Produktweg über das Ventil nun geöffnet oder geschlossen ist. Der heutige Stand der Technik birgt daher aufgrund der Nutzung von Hilfsgrößen das Risiko, in der Anlagensteuerung von einer falschen Ventilstellung auszugehen. Der Prozessablauf würde bei einer falsch angenommenen Ventilstellung gestört, woraus unnötig zum Teil hohe Kosten entstehen.

Für den Betreiber des Ventils ist es daher von großem Interesse zuverlässig zu erkennen, ob das Ventil nun seine Aufgabe erfüllt: das Medium, beispielsweise Produkt, Produktvorstufe oder Produktbestandteil, absperrt, verteilt oder vermischt.

Im Zusammenhang mit so genannten Doppelsitzventilen mit Leckageraum ist durch die EP 1 766 276 A1 bekannt geworden, am Auslass des Leckageraumes einen Sensor vorzusehen, der austretende Leckage nachweist. Diese Leckage tritt durch defekte Dichtungen an wenigstens einem der Ventilteller aus dem Förderraum aus, in dem sich Produkt befindet. US 2004/107767 A1 beschreibt ein Fluidsteuerventil, das Mittel zur Bestimmung einer Leckage aufweist, wobei die Mittel als Sensoren Druckaufnehmer umfassen. Es sind drei solcher Druckaufnehmer sowie eine Blende im Bereich des Ventilsitzes vorgesehen, wobei der erste Druckaufnehmer stromaufwärts der Blende, der Zweite auf der Höhe der Blende und der Dritte stromabwärts der Blende angeordnet ist. Mit einer Druckmessung durch zweiten und dritten Druckaufnehmer wird der Fluss von Fluid durch die Blende bestimmt.

US 2010/0305883 A1 beschreibt ein Druckentlastungsventil bzw. eine Gruppe solcher Ventile. Es wird vorgeschlagen, die Temperatur eines durch das Ventil strömenden Fluids stromabwärts eines Ventilsitzes zu messen. Dies geschieht in Kombination mit einer Druckmessung, wobei die Druckmessung ihren Messpunkt in einem an das Druckentlastungsventil angeschlossenen Leitungssystem hat.

US 2005/0016592 A1 betrifft ein Ventil mit einem drehbaren Verschlussteil, wobei die Drehung durch einen Schrittmotor bewirkt wird. Eine Ansteuerung des Schrittmotors zur Regelung eines Flusses von Fluid durch das Ventil erfolgt nach Auswertung von Messungen an dem Fluid. Hierzu ist ein Sensor am Ventilkörper vorgesehen, der beispielsweise ein Flussmengenmesser, ein Drucksensor, ein Leitfähigkeitssensor oder ein Temperaturfühler sein kann.

Aufgabe der Erfindung ist es, eine zuverlässigere Messung der Stellung des Ventiltellers vorzustellen.

Diese Aufgabe wird gelöst durch ein Ventil mit den Merkmalen des Anspruchs 1. Die abhängigen Ansprüche 2 bis 6 geben vorteilhafte Weiterbildungen an.

Der Kerngedanke der Erfindung ist, die Zuverlässigkeit durch eine direkte Messung im Ventil zu erhöhen. Daher ist im Ventil eine Sensorik zur Messung der Ventilfunktion angeordnet. Die Sensorik kann in dem Gehäuse oder an dem Ventilteller oder an Gehäuse und Ventilteller angeordnet sein. Durch diese Art der Messung kann unmittelbar die Dichtheit des Ventils bestimmt und damit die Funktion des Ventils überprüft werden. Das Risiko eines auf Grund einer falsch angenommenen Ventilstellung fehlerhaft ablaufenden Prozesses und damit verbundener technischer und wirtschaftlicher Nachteile wird durch die direkte Messung der Ventilfunktion sehr stark verringert.

Insbesondere sind zwei Messprinzipien von Vorteil.

Nach dem ersten Messprinzip wird mit Hilfe wenigstens eines Sensors im Dichtbereich eine aussagekräftige Messung durchgeführt, beispielsweise eine Druckmessung. Die wenigstens eine Dichtung des Ventiltellers wird beispielsweise in eine dafür vorgegebene Nutkontur eingebracht, um in Schließstellung des Ventils eine Dichtwirkung zwischen Ventilteller und Ventilsitz hervorzurufen. Sobald der Ventilteller sich in Richtung Ventilsitz bewegt und die Dichtung durch die Berührung mit dem Ventilteller und daraus entstehender Krafteinleitung verformt, entstehen veränderte Verhältnisse (z.B. mechanische Druckverhältnisse) in der Nut und am Sitzbereich, die es gilt zu erfassen. Mit Detektion des Einfahrens der Dichtung in den Ventilsitz kann eine zuverlässige Aussage über die Wirkung der Dichtung erfolgen.

Nach dem zweiten Messprinzip werden im von einer Umgebung des Ventils getrennten Ventilinnenraum, dem Produktraum, an spezifischen Stellen des Gehäuses oder/und des Ventiltellers Sensoren angebracht, die z.B. eine Temperaturveränderung oder/und eine Feuchteveränderung erfassen und auswerten. Eine Signalverarbeitungseinheit kann vorgesehen sein, die Veränderung durch Vergleich mit einem gebildeten oder bestimmten Referenzwert ermittelt. In Abhängigkeit des Prozessabschnittes und des Prozesses können dann Rückschlüsse auf die Dichtigkeit des Ventils bzw. auf Veränderungen im Prozess gebildet werden.

Das zweite Messprinzip kann eine Ergänzung zum ersten Messprinzip darstellen, wenn die Schließstellung des Ventils bereits über das erste Messprinzip erfasst wurde und andere Medien bzw. Abläufe im Prozess die Detektion von Medium im Gehäuse für den weiteren Prozess als hilfreiche Größe darstellen könnte.

Anhand eines Ausführungsbeispiels sollen die Erfindung näher erläutert und die Darstellung der Wirkungen und Vorteile vertieft werden.

Es zeigen:
- Fig. 1:: Längsschnitt durch ein Ventil mit einer Sensorik in geöffneter Stellung des Schließelements;
- Fig. 2:: Ansicht des Details "A": Schnitt durch Ventilgehäuse und Ventilteller.

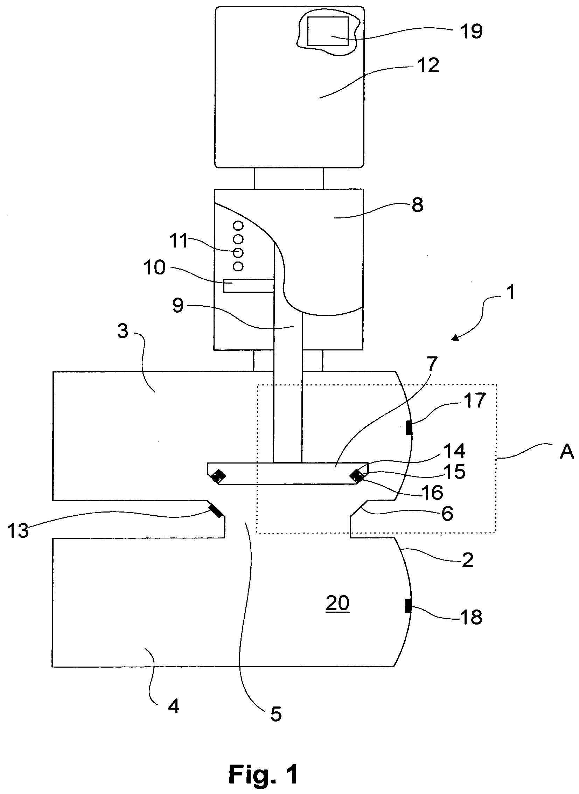

In Fig.1 ist ein Ventil 1 der Getränketechnik, Lebensmitteltechnik, Pharmazie und Biochemie in einem schematischen Schnitt gezeigt. Diese Anwendungsgebiete erfordern eine hygienische bis aseptische Gestaltung des Ventils mit Blick auf die Dichtungen, die verwendeten Materialien, beispielsweise Edelstahl, und die Strömungsführung.

Das Ventil 1 besitzt ein Ventilgehäuse 2, welches einen ersten Rohrleitungsanschluss 3 und einen zweiten Rohrleitungsanschluss 4 umfasst. Die Rohrleitungsanschlüsse 3 und 4 sind mit den Rohren einer Prozessanlage verbindbar, beispielsweise mit einer Schweißverbindung. Zwischen den Rohrleitungsanschlüssen 3 und 4 sind im Ventilgehäuse 2 ein Produktraum 20 und eine Durchtrittsöffnung 5 angeordnet. Die Durchtrittsöffnung 5 ist von einem Ventilsitz 6 umgeben. Im Ventilgehäuse 2 befindet sich ein Ventilteller 7, der mit dem Ventilsitz 6 in berührenden Kontakt bringbar ist. Bei Berührung von Ventilsitz 6 und Ventilteller 7 ist eine durch den Produktraum 20 erfolgende Fluidverbindung zwischen erstem und zweitem Rohrleitungsanschluss 3 und 4 unterbrochen. Die Fluidverbindung ist hergestellt, wenn Ventilsitz 6 und Ventilteller 7 voneinander entfernt werden.

Die Bewegung des Ventiltellers 7 wird von einem Antrieb 8 bewirkt. Dieser kann elektromotorisch ausgeführt sein. Im dargestellten Beispiel ist er druckmittelbetrieben ausgeführt und umfasst einen mit einer Ventilstange 9 verbundenen Kolben 10, der mit Hilfe eines Druckmittels gegen die Kraft einer Feder 11 bewegt wird. Die Ventilstange 9 ist mit dem Ventilteller 7 verbunden, so dass die Bewegung des Kolbens 10 auf den Ventilteller 7 übertragen wird. Der Antrieb 8 kann von einer an den Antrieb 8 oder das Ventil 1 angekoppelten Ventilsteuereinrichtung 12 angesteuert sein, die den Elektromotor antreibt oder im vorliegenden Beispiel die Druckmittelzufuhr steuert.

Ein erster Sensor 13 ist am Ventilsitz 6 angeordnet. Er ist als Drucksensor ausgeführt und gibt ein Signal aus, das in ihn eingeleitete Kräfte repräsentiert. Diese Kräfte werden vom Antrieb 8 erzeugt und über den Ventilteller 7 in den Ventilsitz 6 eingeleitet.

Alternativ oder zusätzlich kann ein zweiter Sensor 14 an einer Nut 16 angeordnet sein, die im Ventilteller 7 ausgebildet ist. In ihr ist eine Dichtung 15 aufgenommen, die bei Berührung von Ventilteller 7 und Ventilsitz 6 die Trennung der Fluidverbindung verbessert. Die Dichtung 15 ist so gestaltet, dass bei Berührung von Ventilteller 7 und Ventilsitz 6 eine Verformung der Dichtung 15 stattfindet. Hierdurch wird eine Kraft in die Wände der Nut 16 eingeleitet, die mit einem als Drucksensor ausgeführten zweiten Sensor 14 messbar ist. Der zweite Sensor 14 ist vorteilhaft so angeordnet, dass die sich verformende Dichtung 15 Kräfte in ihn einleitet, die zu einem Signal im zweiten Sensor 14 führen.

Alternativ oder zusätzlich zu der bis hierhin vorgestellten Sensorik kann wenigstens ein Fluidsensor im Ventilgehäuse 2 vorgesehen sein. Im gezeigten Beispiel sind im Innenraum des Ventilgehäuses ein erster Fluidsensor 17 und ein zweiter Fluidsensor 18 angeordnet. Der erste Fluidsensor 17 ist im mit dem ersten Rohrleitungsanschluss 3 verbundenen Teil des Innenraums vorgesehen, der zweite Fluidsensor 18 in demjenigen Teil, der mit dem zweiten Rohrleitungsanschluss 4 verbunden ist. Erster und/oder zweiter Fluidsensor 17 und 18 können ein Signal ausgeben, das beispielsweise von Feuchtigkeit oder Temperatur im Innenraum des Ventilgehäuses 2 abhängt. Dabei können die Fluidsensoren 17 und 18 auf unterschiedliche thermodynamische Größen ansprechen. Es kann auch, wenn es für den Prozess ausreicht, lediglich ein Fluidsensor vorhanden sein. Die Fluidsensoren sprechen auf die Anwesenheit von Fluid, insbesondere Prozessgut, beispielsweise Flüssigkeit, im Innenraum des Ventils 1an. Somit kann über das Signal des Fluidsensors 17 oder 18 festgestellt werden, ob das Prozessgut an der Stelle im Ventil 1 ist, an der es gemäß Erwartung aufgrund des Prozesses sein sollte. In Offenstellung des Ventiltellers 7 sollten die Fluidsensoren 17 und 18 ein vergleichbares Signal liefern. Unterschiede im Signal können durch Kalibrierung während eines bekannten Betriebszustandes des Ventils 1 ausgeglichen werden.

Denkbar sind verschiedene Messsysteme. Beispielsweise kann der Fluidsensor 17 oder 18 ausgelegt sein, bei Berührung durch ein Medium ein hochfrequentes elektromagnetisches Wechselfeldes in das Medium einzukoppeln und auftretende Änderungen durch die dielektrischen Eigenschaften des Mediums zu detektieren. Alternativ kann die Leitfähigkeit des Mediums genutzt werden, um ein Sensorsignal zu erzeugen.

Beispielhaft kann in der Ventilsteuereinrichtung 12 eine Signalverarbeitungseinrichtung 19 vorgesehen sein, die mit den vorhandenen Sensoren 13, 14, 17 und/oder 18 verbunden ist. Sie kann dazu eingerichtet sein, auf Grundlage eines Sensorsignales auf den Schaltzustand des Ventils 1 zu schließen und ein den Schaltzustand repräsentierendes Signal auszugeben. Die Signalverarbeitungseinheit 19 kann eingerichtet sein, die Veränderung des Signales oder der Signale durch Vergleich mit einem gebildeten oder bestimmten Referenzwert zu ermitteln. In Abhängigkeit des Prozessabschnittes und des Prozesses können dann Rückschlüsse auf die Dichtigkeit des Ventils bzw. auf Veränderungen im Prozess gebildet werden.

Die Ventilsteuereinrichtung 12 kann dazu eingerichtet sein, ein Sensorsignal einem mit der Ventilsteuereinrichtung 12 kommunizierendem Gerät bereitzustellen. Dies kann ein Gerät der Steuerung der Prozessanlage sein, so dass das Sensorsignal zur Ablaufsteuerung des Prozesses zur Verfügung steht.

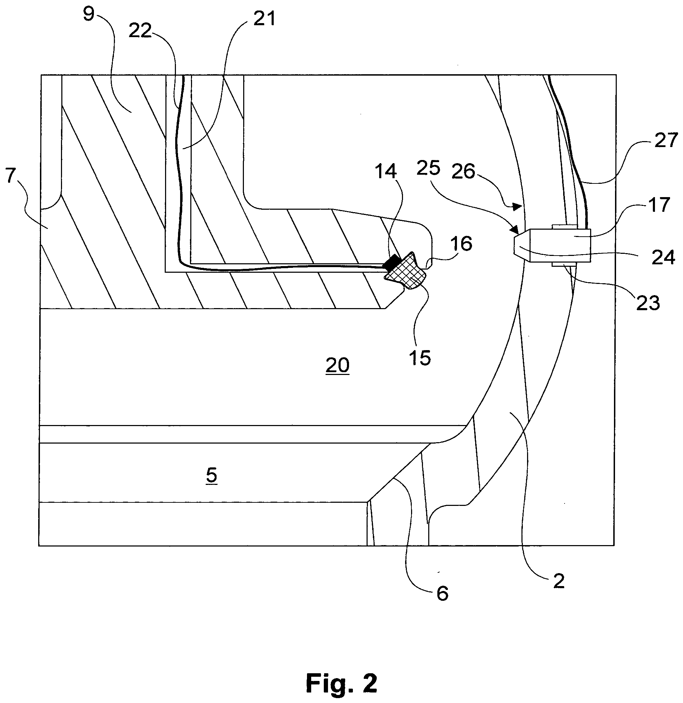

In Fig. 2 ist das Detail A aus Fig. 1 zur Veranschaulichung des Einbaus von zweitem Sensor 14 und erstem Fluidsensor 17 in geschnittener Ansicht dargestellt.

Die Dichtung 15 ist in der Nut 16 aufgenommen und füllt diese soweit aus, dass wenig bis keine Hohlräume verbleiben. Dies gilt insbesondere, wenn sich der Ventilteller 7 in Schließstellung befindet. Die Dichtung 15 ist dann zwischen den Wandungen der Nut 16 und dem Ventilsitz 6 eingeklemmt und verformt. Vorteilhaft wird nun der maximale Füllgrad der Nut 16 erreicht. Der zweite Sensor 14 ist so in der Nut 16 angeordnet, dass in Schließstellung des Ventiltellers 7 eine Kraft in ihn eingeleitet wird. Diese Kraft kann aus der Verformung der Dichtung 15 und/oder der Verspannung des Ventiltellers 7 auf Grund der aus dem Antrieb 8 stammenden Schließkraft herrühren. Beispielsweise auf Basis des piezoelektrischen Effekts entsteht im zweiten Sensor 14 ein elektrisches Signal. In einem Kanal 22, der durch Ventilteller 7 und Ventilstange 9 verläuft und gegen den Produktraum 20 abgedichtet ist, wird das elektrische Signal aus dem Innenraum des Ventils 1 herausgeführt. Vorteilhaft wird es der Signalverarbeitungseinheit 19 der Ventilsteuereinrichtung 12 zugeführt.

Der erste Fluidsensor 17 ist in der Wandung des Ventilgehäuses 2 angeordnet. Hierzu ist eine Befestigung 23 vorgesehen, beispielsweise eine Verschraubung des Gehäuses des ersten Fluidsensors 17 mit dem Ventilgehäuse 2, die mit Dichtmitteln versehen sein kann, um den Produktraum 20 sicher von einer Umgebung des Ventils 1 zu trennen.

Der zweite Fluidsensor 17 weist einen Messkopf 24 auf, der wenigstens zu einem Teil in den Produktraum 20 hineinragt. Eine Messkopfoberfläche 25 geht so spaltfrei und stufenlos wie technisch machbar und zum Erreichen hygienischer oder wenn nötig aseptischer Standards notwendig in eine Gehäuseinnenfläche 26 des Ventilgehäuses 2 über. Die Messkopfoberfläche 25 kann zu diesem Zweck und abhängig vom Messprinzip aus Edelstahl oder Polytetrafluorethylen (PTFE) geformt sein. Eine zweite Signalleitung 27 verbindet den zweiten Fluidsensor 17 mit der Signalverarbeitungseinrichtung 19 der Ventilsteuereinrichtung 12. Diese zweite Signalleitung 27 kann wie dargestellt außen am Ventilgehäuse 2 verlegt sein.

Das Ventil 1 kann wie dargestellt mit einem Ventilteller 7 ausgeführt sein. Der Ventilteller 7 kann in einer Weiterbildung wenigstens eine zusätzliche Dichtung aufweisen. Alternativ kann das Ventil wenigstens zwei Ventilteller aufweisen, zwischen denen ein Leckageraum ausbildbar ist. Ziel ist es dabei jeweils, mittels der nach den hier aufgezeigten Gestaltungsgesichtspunkten aufgebauten Sensorik auf die Schaltstellung der Ventilteller schließen zu können.

### Bezugszeichenliste

- 1: Ventil
- 2: Ventilgehäuse
- 3: erster Anschluss
- 4: zweiter Anschluss
- 5: Durchtrittsöffnung
- 6: Ventilsitz
- 7: Ventilteller
- 8: Antrieb
- 9: Ventilstange
- 10: Kolben
- 11: Feder
- 12: Ventilsteuereinrichtung
- 13: erster Sensor
- 14: zweiter Sensor
- 15: Dichtung
- 16: Nut
- 17: erster Fluidsensor
- 18: zweiter Fluidsensor
- 19: Signalverarbeitungseinrichtung
- 20: Produktraum
- 21: Kanal
- 22: erste Signalleitung
- 23: Befestigung
- 24: Messkopf
- 25: Messkopfoberfläche
- 26: Gehäuseinnenfläche
- 27: zweite Signalleitung
- A: Detail

## Patentansprüche

1. Ventil (1) mit einem Ventilgehäuse (2), welches mindestens einen ersten Anschluss (3) und einen zweiten Anschluss (4) aufweist, mit mindestens einem im Ventilgehäuse (2) angeordneten Ventilteller (7), einer zwischen erstem Anschluss (3) und zweitem Anschluss (4) angeordneten Durchtrittsöffnung (5) und mindestens einem die Durchtrittsöffnung (5) umgebenden Ventilsitz (6), wobei der Ventilteller (7) zur Trennung einer Fluidverbindung zwischen erstem Anschluss (3) und zweitem Anschluss (4) mit dem Ventilsitz (6) in Berührung bringbar ist, wobei das Ventil (1) eine innerhalb des Ventilgehäuses (2) angeordnete Sensorik (13, 14, 17, 18) umfasst und die Sensorik (13, 14, 17, 18) wenigstens einen Fluidsensor (17, 18), insbesondere einen Feuchtigkeitssensor, Leitfähigkeitssensor oder Temperatursensor, umfasst und eine Ventilsteuereinrichtung (12) eine Signalverarbeitungseinrichtung (19) aufweist, die mit wenigstens einem Sensor (13, 14, 17, 18) verbunden und dazu eingerichtet ist, auf Grundlage eines Sensorsignales auf den Schaltzustand des Ventils (1) zu schließen und ein den Schaltzustand repräsentierendes Signal auszugeben, **dadurch gekennzeichnet, dass** die Sensorik (13, 14, 17, 18) in einem den ersten Anschluss (3) mit dem zweiten Anschluss (4) fluidverbindenden Produktraum (20) des Ventilgehäuses (2) angeordnet ist und eine Messkopfoberfläche (25) eines Messkopfes (24) des Fluidsensors (17, 18) gedichtet in eine Gehäuseinnenfläche (26) des Ventilgehäuses (2) übergeht.

2. Ventil (1) nach Anspruch 1, **dadurch gekennzeichnet, dass** die Sensorik (13, 14, 17, 18) einen am Ventilsitz (6) angeordneten ersten Sensor (13) umfasst.

3. Ventil (1) nach einem der vorhergehenden Ansprüche, **dadurch gekennzeichnet, dass** die Sensorik (13, 14, 17, 18) einen zweiten Sensor (14) umfasst, der an einer am Ventilteller (7) angebrachten und eine Dichtung (15) aufnehmende Nut (16) angeordnet ist.

4. Ventil (1) nach Anspruch 1, **dadurch gekennzeichnet, dass** der Fluidsensor (17, 18) ein von der Feuchtigkeit abhängiges Signal erzeugt.

5. Ventil (1) nach Anspruch 1 oder 4, **dadurch gekennzeichnet, dass** der Fluidsensor (17, 18) ein von der Temperatur abhängiges Signal erzeugt.

6. Ventil (1) nach Anspruch 1, **dadurch gekennzeichnet, dass** die Ventilsteuereinrichtung (12) dazu eingerichtet ist, ein Sensorsignal einem mit der Ventilsteuereinrichtung (12) kommunizierendem Gerät bereitzustellen.

## Claims

1. A valve (1) with a valve housing (2), which has at least one first connector (3) and one second connector (4), with at least one valve plate (7) arranged in the valve housing (2), with an opening (5) arranged between the first connector (3) and the second connector (4) and with at least one valve seat (6), which surrounds the opening (5), wherein the valve plate (7) can be brought into contact with the valve seat (6) in order to interrupt a fluid connection between the first connector (3) and the second connector (4), wherein the valve (1) comprises a sensor system (13, 14, 17, 18) that is arranged within the valve housing (2), and wherein said sensor system (13, 14, 17, 18) comprises at least one fluid sensor (17, 18), in particular a moisture sensor, conductivity sensor or temperature sensor, and a valve control apparatus (12) has a signal processing apparatus (19), which is linked to at least one sensor (13, 14, 17, 18) and which is designed to detect the switching status of the valve (1) based on a sensor signal and to emit a signal representing the switching status, **characterized in that** the sensor system (13, 14, 17, 18) is arranged in a product space (20) of the valve housing (2) that provides a fluid connection between the first connector (3) with the second connector (4), and a surface (25) of a measuring head (24) of the fluid sensor (17, 18) merges into an inner surface (26) of the valve housing (2) in a sealed manner.

2. The valve (1) according to claim 1, **characterized in that** the sensor system (13, 14, 17, 18) comprises a first sensor (13), which is arranged on the valve seat (6).

3. The valve (1) according to one of the preceding claims, **characterized in that** the sensor system (13, 14, 17, 18) comprises a second sensor (14), which is arranged in a groove (16) that is introduced into the valve plate (7) and that accommodates a seal (15).

4. The valve (1) according to claim 1, **characterized in that** the fluid sensor (17, 18) generates a signal depending on the moisture.

5. The valve (1) according to claim 1 or 4, **characterized in that** the fluid sensor (17, 18) generates a signal depending on the temperature.

6. The valve (1) according to claim 1, **characterized in that** the valve control apparatus (12) is configured to send a sensor signal to a device that communicates with said valve control apparatus (12).

## Revendications

1. Soupape (1) avec un boîtier de soupape (2) présentant au moins un premier raccord (3) et un deuxième raccord (4), avec au moins une tête de soupape (7) disposée dans le boîtier de soupape (2), une ouverture de passage (5) disposée entre le premier raccord (3) et le deuxième raccord (4), et au moins un siège de soupape (6) entourant l'ouverture de passage (5), dans laquelle la tête de soupape (7) peut être mis en contact avec le siège de soupape (6) pour la rupture d'une liaison fluidique entre le premier raccord (3) et le deuxième raccord (4), la soupape (1) comportant un système de capteurs (13, 14, 17, 18) disposé à l'intérieur du boîtier de soupape (2), où le système de capteurs (13, 14, 17, 18) comporte au moins un capteur fluidique (17, 18), en particulier un capteur d'humidité, un capteur de conductivité ou un capteur de température, et où un dispositif de commande de soupape (12) présente un dispositif de traitement de signaux (19), lequel est relié à au moins un capteur (13, 14, 17, 18) et conçu pour déterminer l'état de commutation de la soupape (1) sur la base d'un signal de capteur et pour émettre un signal représentant l'état de commutation, **caractérisée en ce que** le système de capteurs (13, 14, 17, 18) est disposé dans un espace de produit (20) du boîtier de soupape (2) reliant fluidiquement le premier raccord (3) au deuxième raccord (4), et **en ce qu'**une surface de tête de mesure (25) d'une tête de mesure (24) du capteur fluidique (17, 18) se raccorde de façon étanche à une surface intérieure de boîtier (26) du boîtier de soupape (2).

2. Soupape (1) selon la revendication 1, **caractérisée en ce que** le système de capteurs (13, 14, 17, 18) comporte un premier capteur (13) disposé sur le siège de soupape (6).

3. Soupape (1) selon l'une des revendications précédentes, **caractérisée en ce que** le système de capteurs (13, 14, 17, 18) comporte un deuxième capteur (14) disposé sur une rainure (16) fixée à la tête de soupape (7) et recevant un joint d'étanchéité (15).

4. Soupape (1) selon la revendication 1, **caractérisée en ce que** le capteur fluidique (17, 18) produit un signal dépendant de l'humidité.

5. Soupape (1) selon la revendication 1 ou 4, **caractérisée en ce que** le capteur fluidique (17, 18) produit un signal dépendant de la température.

6. Soupape (1) selon la revendication 1, **caractérisée en ce que** le dispositif de commande de soupape (12) est conçu pour fournir un signal de capteur à un appareil communiquant avec le dispositif de commande de soupape (12).
